# EUROPÄISCHE PATENTANMELDUNG

(11) **EP 4 495 722 A2**
(43) Veröffentlichungstag der Anmeldung: **22.01.2025**
(21) Anmeldenummer: 24214819.5
(22) Anmeldetag: 10.10.2016
(51) Int. Cl.: G05B 19/425

(54) **ROBOTERSYSTEM**

(30) Priorität: 08.10.2015 DE 102015012962
(62) Teilanmeldung aus: 16791316.9
(71) Anmelder: Haddadin, Sami, 30173 Hannover (DE)
(72) Erfinder: Haddadin, Sami, 30173 Hannover (DE)
(74) Vertreter: Cohausz & Florack

(57) **Zusammenfassung**

Die Erfindung betrifft ein Robotersystem mit zumindest einem Roboterarm und einer Steuereinheit, die so ausgelegt ist, dass sie zumindest eine vordefinierte Operation, die von dem Robotersystem durchführbar ist, vorgeben kann. Darüber hinaus umfasst das Robotersystem zumindest eine an dem Roboterarm angebrachte Eingabevorrichtung, die so ausgebildet ist, dass über die Eingabevorrichtung die vordefinierten Operationen des Robotersystems parametriert werden können. Dabei ist die Eingabevorrichtung so ausgebildet, dass sie einem Benutzer des Robotersystems bei der Einstellung des Ablaufs von Operationen, der logischen Reihenfolge der Operationen und/oder der Parametrierung der vordefinierten Operationen für das Robotersystem eine an den Benutzer gerichtete Rückmeldung liefern kann.

## Beschreibung

Die Erfindung betrifft ein Robotersystem mit zumindest einem Roboterarm, an dessen Ende während der Operation des Robotersystems ein Effektor angebracht sein kann, der z.B. aus einem Werkzeug bestehen kann.

Roboter haben sich inzwischen in vielen Bereichen der Industrie etabliert und werden z.B. in der Automobilindustrie zum Montieren, Kleben, Schrauben, Schneiden, Schweißen, Lackieren oder Heben von schweren Gegenständen verwendet.

Um einem Robotersystem die gewünschten Operationen beizubringen, muss das Robotersystem programmiert werden. Das kann mit einer On-line- oder Off-line-Methode durchgeführt werden, wobei bei der Off-line-Methode das Roboterprogramm ohne Benutzung des Roboters erstellt wird.

Bei der On-Line-Programmierung wird der Roboter zur Programmierung benötigt, was z.B. bei der direkten Teach-in-Programmierung der Fall ist. Hier werden die einzelnen Stützpunkte der gewünschten Bewegungsbahnen durch direktes Führen des Effektors durch einen Bediener angefahren und die jeweilige Stellung des Effektors, z.B. eines Greifwerkzeugs, über die internen Geber ermittelt und gespeichert. Nachdem die Bahngeometrie in dieser Weise programmiert wurde, kann das Bahnprogramm durch Zusatzanweisungen, die über ein externes Handprogrammiergerät eingegeben werden, ergänzt werden.

Die bisherigen Verfahren der beschriebenen On-Line-Programmierung sind für den Bediener zeitaufwändig und wenig komfortabel.

Es ist daher die Aufgabe der vorliegenden Erfindung ein Robotersystem zu schaffen, bei dem die Programmierung des Robotersystems im Vergleich zu bisherigen Systemen schneller und einfacher durchgeführt werden kann.

Diese Aufgabe wird durch ein Robotersystem gelöst, wie es im Anspruch 1 angegeben ist.

Vorteilhafte Ausführungsformen der Erfindung sind in den Unteransprüchen 2 bis 22 angegeben.

Ausführungsbeispiele der Erfindung werden anhand der beigefügten Zeichnungen erläutert.

Es zeigen:
- Fig. 1: einen Roboter gemäß einer Ausführungsform des Robotersystems gemäß der Erfindung;
- Fig. 2: ein als Pilotkopf bezeichnetes letztes Roboterarmglied des Roboterarms des erfindungsgemäßen Robotersystems, das bei einer Ausführungsform des erfindungsgemäßen Robotersystems zum Einsatz kommt;
- Fig. 3: einen Teil einer Eingabevorrichtung, die bei einer bevorzugten Ausführungsform des erfindungsgemäßen Robotersystems zum Einsatz kommt.

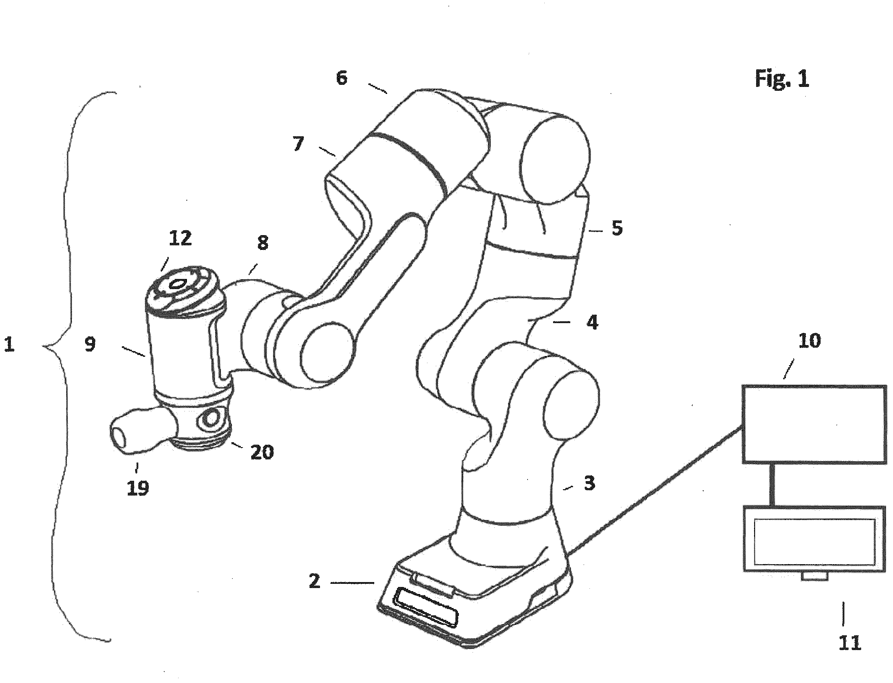

Fig. 1 zeigt ein erfindungsgemäßes Robotersystem, das einen Roboter 1 umfasst, der auf einem Roboterfuß 2 steht, der einen Roboterarm trägt, der aus sieben Roboterarmgliedern 3, 4, 5, 6, 7, 8 und 9 besteht, die über Bewegungsachsen (Gelenke) miteinander verbunden sind. Das letzte Roboterarmglied 9, das hier auch nachfolgend als Pilotkopf bezeichnet wird, ist dabei so ausgebildet, dass im unteren Teil des Pilotkopfes ein (in der Fig. 1 nicht dargestellter) Effektor angebracht werden kann, der die Interaktion des Roboters mit der Umwelt bewirken kann.

Effektoren, die bei dem erfindungsgemäßen Robotersystem eingesetzt werden, können z.B. Werkzeuge zur Werkstückbearbeitung, z.B. ein Bohrer, Greifersysteme zur Handhabung und Manipulation von Objekten, Messmittel zur Ausführung von Prüfaufträgen oder Kameras sein, mit denen der Roboter Beobachtungen durchführen kann.

Der Roboter 1 ist mit einem Computer 10 verbunden, der die Steuerung des Roboters 1 übernimmt und mit einer Anzeigevorrichtung 11 verbunden ist, auf der eine grafische Benutzeroberfläche zur Programmierung des Roboters angezeigt werden kann und die z.B. aus einem Computerbildschirm oder dem Bildschirm eines Laptops bestehen kann. Der Computer 10 wird nachfolgend auch als Steuereinheit bezeichnet.

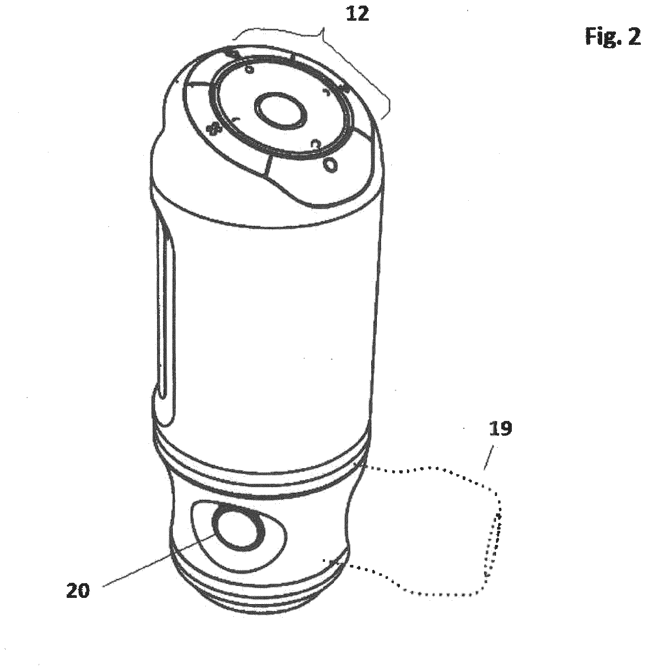

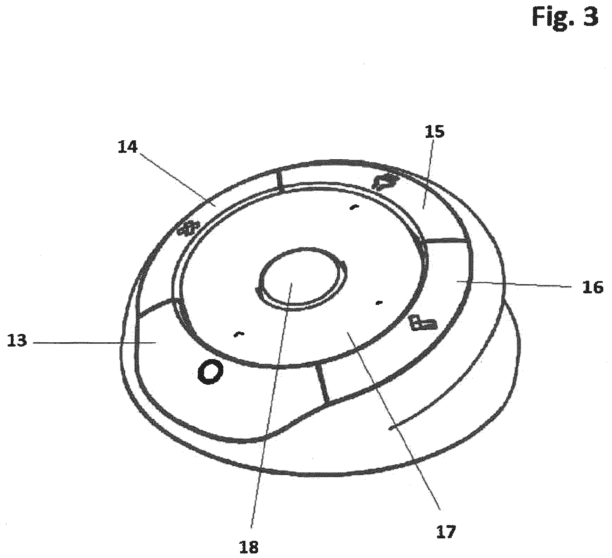

Der Pilotkopf 9 des Robotersystems, der in Fig. 2 in größerer Dimension dargestellt ist, weist im oberen Bereich ein Tastenpanel 12 auf, das ebenfalls in größerer Dimension in der Fig. 3 dargestellt ist. Das in der Fig. 3 dargestellte Tastenpanel weist vier Bedienungstasten 13, 14, 15 und 16 in Form von Kurzhubtastern auf, die mit verschiedenen Funktionen, die häufig vom Bediener im Rahmen der Programmierung und/oder Parametrierung des Robotersystems aufgerufen werden müssen, wie z.B. Löschen, Speichern oder Einstellen, belegt sein können und mit entsprechenden Symbolen gekennzeichnet sind.

Die vier Bedienungstasten 13, 14, 15 und 16 umgeben kreisförmig einen D-Pad-Kurzhubtaster 17, der nach oben, unten, links und rechts gekippt werden kann, um z.B. einen Cursor oder eine Auswahl in einem auf der grafischen Benutzeroberfläche der Anzeigevorrichtung dargestellten Menü in den Richtungen oben, unten, links und rechts zu steuern. Zusammengefasst stellen die an dem Roboterarm angebrachten Taster des Tastenpanels 12 sowie der Taster 20 eine Eingabevorrichtung dar.

Anstelle eines D-Pad-Kurzhubtasters können auch andere Richtungstasten zur Cursorsteuerung verwendet werden, z.B. vier voneinander isolierte Taster für jede der Richtungen oben, unten, links und rechts.

In der Mitte des D-Pad-Kurzhubtasters 17 ist eine transparente Leuchtfläche 18 angebracht, die durch darunter angebrachte Leuchtelemente, z.B. eine oder mehrere LEDs, die von der Steuereinheit aktiviert werden können, in einer Farbe oder verschiedenen Farben beleuchtet werden kann.

Im unteren Teil des Pilotkopfes 9 ist noch ein Griff 19 befestigt, mit dem der Pilotkopf durch einen Bediener des Robotersystems bequem geführt werden kann.

Ferner befindet sich im unteren Teil des Pilotkopfes 9 ein weiterer Taster 20, der so auf dem Pilotkopf angebracht ist, das er vom Bediener des Robotersystems mit der gleichen Hand bedient werden kann, die den Pilotkopf 9 oder den Griff 19 des Pilotkopfes 9 und damit den Roboterarm führt.

Die Steuereinheit 10, die Hard- und Software umfasst, ist so ausgebildet, dass sie zumindest eine vordefinierte Operation, die von dem Robotersystem durchführbar ist, vorgeben kann, wobei diese Operation die entsprechenden Steuerbefehle umfasst, mit denen die Achsen und der Antrieb des Roboters geregelt werden sowie die (in Fig. 1 nicht dargestellten) Sensoren des Roboters gesteuert werden.

Vorzugsweise sind dabei in der Steuereinheit eine Vielzahl von vordefinierten Operationen und die dazugehörigen Befehle abgespeichert. Zu diesen vordefinierten Operationen können dabei z.B. das Aufnehmen von Gegenständen, das Ablegen von Gegenständen, das Einfügen von Gegenständen, das Einschrauben von Gegenständen, das Bohren, die Oberflächenbearbeitung oder die Bedienung von Tasten gehören.

Den vordefinierten Operationen sind dabei in der Steuereinheit Iconszugeordnet, die auf einer graphischen Benutzeroberfläche, die über die Steuereinheit auf der 20 Anzeigevorrichtung angezeigt werden kann, dargestellt werden können.

Bei einer bevorzugten Ausführungsform des erfindungsgemäßen Robotersystems kann dabei der Bediener über die Taster 13, 14, 15, 16 und 17 der Eingabevorrichtung die gewünschten Operationen, die das Robotersystem zur Bewältigung einer vorgegebenen Aufgabe durchführen soll, aus einem auf der graphischen Benutzeroberfläche dargestellten Menü auswählen, indem sich der Bediener z.B. mittels des D-Pad-Kurzhubtasters in dem Menü zu dem entsprechenden Operations-Icon bewegt und nach dessen Auswahl dieses Icon dann durch Betätigen einer der vier Bedienungstasten 13, 14, 15 und 16, die zuvor mit einer entsprechenden Funktion belegt wurde, bestätigt.

Bei einer alternativen Ausführungsform kann auch die Taste 20 zur Bestätigung einer vorher mittels des D-Pad-Hubschalters ausgewählten Operation verwendet werden.

Das Robotersystem gemäß der Erfindung kann bei einer weiteren Ausführungsform darüber hinaus so ausgebildet sein, dass die Steuereinheit so ausgebildet ist, dass sie auf der grafischen Benutzeroberfläche bei der Parametrierung einer Operation für jede Operation ein vorherbestimmtes und in der Steuereinheit gespeichertes Parametrierungs-Untermenü anzeigt, in dem die verschiedenen vorherbestimmten Parametrierungsoptionen dargestellt sind, die dann mit Eingabevorrichtung am Pilotkopf 9 über die Taster 13, 14, 15, 16, 17 und/oder 20 über eine Steuerung der grafischen Benutzeroberfläche des Parametrierungs- Untermenüs ausgewählt werden können, um eine Parametrierung durchzuführen.

Bei einer solchen Parametrierung können z.B. Parameter wie die Koordinaten von Punkten, die der Effektor anfahren soll, Drehmomente, Kräfte, Beschleunigungen, Zeitdauern, Anzahl der Wiederholungen oder Folgeoperationen einer Operation über die Eingabevorrichtung eingegeben werden.

Bei einer weiteren Ausführungsform werden in der Steuereinheit alle überhaupt möglichen Operationen des Robotersystems sowie alle möglichen Parametrierungs-Untermenüs für diese Operationen abgelegt, wobei diese so strukturiert werden, dass der Bediener an der Eingabevorrichtung mit einer sehr begrenzten Anzahl von Eingabeelementen, z.B. Tastern, alle Programmierungen des Robotersystems mithilfe der Eingabevorrichtung vornehmen kann, so dass die Programmierung ohne Zuhilfenahme von externen Eingabevorrichtungen wie Computertastaturen erfolgen kann. Im Idealfall kann das mit dem in Fig.1 dargestellten Pilotkopf sogar nur mit einer Hand erfolgen, so dass die zweite Hand des Bedieners für andere Funktionen, z.B. die Bedienung eines NOT-AUS-Schalters frei ist.

Die Einstellung der Parameter kann dabei auch durch ein in der Steuereinheit gespeichertes Dialog-Menü erfolgen, wobei die einzelnen Parameter einzeln abgefragt werden und jeweils eine Eingabe an der Eingabevorrichtung über die Taster erfolgen muss. Hier können dann entsprechende Rückmeldungen an der Eingabevorrichtung erfolgen, die die jeweilige Eingabe des Bedieners bestätigen (z.B. durch ein grünes Leuchtfeld 18) oder als fehlerhaft darstellen (z.B. durch ein rotes Leuchtfeld 18).

Die am Pilotkopf angebrachte Eingabevorrichtung muss nicht notwendigerweise aus Tastern bestehen, sondern kann z.B. auch ein Touchpad, einen Trackball, einen Joystick oder ähnliche Vorrichtungen umfassen.

Bei dem erfindungsgemäßen Robotersystems ist die Eingabevorrichtung darüber hinaus so ausgebildet, dass sie einem Benutzer des Robotersystems bei der Einstellung des Ablaufs von Operationen des Robotersystems und/oder der Parametrierung der vordefinierten Operationen für das Robotersystem eine an den Benutzer gerichtete Rückmeldung liefern kann.

Eine solche Rückmeldung kann z.B. optisch erfolgen, indem über das Leuchtfeld 18 statische oder variierende Lichtsignale abgegeben werden, die durch die Steuereinheit ausgelöst werden.

Bei einer anderen Ausführungsform kann die Rückmeldung so ausgebildet ist, dass sie haptisch durch den Bediener des Robotersystems erfassbar ist. Das kann z.B. durch ein Vibrieren der Eingabevorrichtung, d.h. des Pilotkopfes 9, geschehen, das von der Steuereinheit ausgelöst wird, indem ein zu dem Pilotkopf gehörender Antrieb entsprechend angesteuert wird.

Gemäß einer weiteren Ausführungsform kann das Tastenfeld auch mehrere Leuchtfelder aufweisen, über die die optischen Rückmeldungen erfolgen.

Die Rückmeldungssignale sind dabei vorzugsweise so ausgebildet, dass sie eine Eingabe des Bedieners positiv oder negativ bestätigen. So könnte z.B. bei einer fehlerhaften Eingabe des Bedieners das Leuchtfeld 18 rot aufleuchten, während es bei einer korrekten Eingabe grün aufleuchtet.

Bei einer weiteren Ausführungsform kann die Rückmeldung auch so ausgebildet sein, dass sie eine Aufforderung zur Auswahl einer vordefinierten Operation des Robotersystems aus einer Gruppe von vordefinierten Operationen oder eine Aufforderung zur Eingabe eines Parameters einer Operation darstellt.

Gemäß einer weiteren Ausführungsform kann die Steuereinheit so konfiguriert sein, dass durch Betätigung bestimmter Tasten und/oder bestimmter Tastenkombinationen auf der Eingabevorrichtung eine bestimmte Auswahl von Operationen und/oder Parametern erfolgt.

Ferner kann die Steuereinheit des Robotersystems gemäß einer weiteren Ausführungsform so ausgebildet sein, dass sie eine graphische Benutzeroberfläche auf einer Anzeigevorrichtung darstellen kann, auf der die vordefinierte Operation darstellbar ist, wobei die Steuereinheit darüber hinaus so ausgebildet ist, dass sie dem Bediener eine Rückmeldung in Abhängigkeit von der auf der graphischen Benutzeroberfläche dargestellten Operation liefern kann.

Bei einer weiteren Ausführungsform des Robotersystems gemäß der Erfindung kann die Rückmeldung auch durch ein akustisches Signal erfolgen. Hierzu kann z.B. direkt an der Eingabevorrichtung ein Lautsprecher angebracht sein, der über die Steuereinheit angesteuert wird.

Die Anzeigevorrichtung des Robotersystems kann auch aus einer 3D-Anzeigevorrichtung bestehen, z.B. einer elektronischen 3D-Brille.

Nachfolgend werden Ausführungsbeispiele der Erfindung erläutert:

### Ausführungsbeispiele

### Ausführungsbeispiel

1. Robotersystem mit zumindest einem Roboterarm, einer Steuereinheit, die ausgelegt ist, zumindest eine vordefinierte Operation, die von dem Robotersystem durchführbar ist, vorzugeben, und zumindest einer an dem Roboterarm angebrachten Eingabevorrichtung, die so ausgebildet ist, dass über die Eingabevorrichtung die vordefinierten Operationen des Robotersystems parametriert werden können, wobei die Eingabevorrichtung so ausgebildet ist, dass sie einem Benutzer des Robotersystems bei der Einstellung des Ablaufs von
   Operationen, der Einstellung der logischen Reihenfolge der Operationen und/oder der Parametrierung der vordefinierten Operationen für das Robotersystem eine an den Benutzer gerichtete Rückmeldung liefern kann.

### Ausführungsbeispiel

2. Robotersystem nach Ausführungsbeispiel 1, bei dem die Rückmeldung optisch erfolgt.

### Ausführungsbeispiel

3. Robotersystem nach Ausführungsbeispiel 2, bei dem die Rückmeldung durch statische oder variierende Lichtsignale erfolgt.

### Ausführungsbeispiel

4. Robotersystem nach einem der vorhergehenden Ausführungsbeispiele, bei dem die Rückmeldung so ausgebildet ist, dass sie haptisch durch den Bediener des Robotersystems erfassbar ist.

### Ausführungsbeispiel

5. Robotersystem nach Ausführungsbeispiel 4, bei dem die Rückmeldung in einem Vibrieren der Eingabevorrichtung besteht.

### Ausführungsbeispiel

6. Robotersystem nach einem der vorhergehenden Ausführungsbeispiele, bei dem die Eingabevorrichtung aus einem Tastenfeld mit mehreren Tasten besteht.

### Ausführungsbeispiel

7. Robotersystem nach Ausführungsbeispiel 6, bei dem darüber hinaus das Tastenfeld Leuchtfelder aufweist, über die die optischen Rückmeldungen erfolgen.

### Ausführungsbeispiel

8. Robotersystem nach Ausführungsbeispiel 6 oder Ausführungsbeispiel 7, bei dem die Tasten des Tastenfeldes so ausgebildet sind, dass sie Lichtsignale abgeben können.

### Ausführungsbeispiel

9. Robotersystem nach einem der Ausführungsbeispiele 6 bis 8, bei welchem die Tasten eine einem Parametrierungsvorgang zugeordnete Farbcodierung aufweisen.

### Ausführungsbeispiel

10. Robotersystem nach einem der Ausführungsbeispiele 6 bis 9, bei dem die Tasten auch Richtungstasten umfassen, die zur zweidimensionalen Steuerung auf einer graphischen Benutzeroberfläche dienen.

### Ausführungsbeispiel

11. Robotersystem nach einem der Ausführungsbeispiele 1 bis 5, bei dem die Eingabevorrichtung aus einem Touchpad, einem Trackball, einem Touch-Display, einem Näherungssensor oder einem Joystick besteht.

### Ausführungsbeispiel

12. Robotersystem nach einem der vorhergehenden Ausführungsbeispiele, bei dem die Rückmeldung so ausgebildet ist, dass sie eine Eingabe des Bedieners positiv oder negativ bestätigt oder eine neutrale Rückmeldung darstellt.

### Ausführungsbeispiel

13. Robotersystem nach einem der vorhergehenden Ausführungsbeispiele, bei dem die Rückmeldung so ausgebildet ist, dass sie eine Aufforderung zur Auswahl einer
vordefinierten Operation des Robotersystems aus einer Gruppe von vordefinierten Operationen darstellt.

### Ausführungsbeispiel

14. Robotersystem nach einem der vorhergehenden Ausführungsbeispiele, bei dem die Rückmeldung so ausgebildet ist, dass sie eine Aufforderung zur Eingabe eines Parameters einer Operation darstellt.

### Ausführungsbeispiel

15. Robotersystem nach einem der vorhergehenden Ausführungsbeispiele, bei dem die im Rahmen der Parametrierung erfassten Parameter Parameter umfassen, die aus der Parameter-Gruppe stammen, die die Parameter Koordinaten von Punkten, die der Effektor anfahren soll, Drehmomente, Kräfte, Beschleunigungen, Zeitdauern, Anzahl der Wiederholungen oder Folgeoperationen einer Operation
umfasst.

### Ausführungsbeispiel

16. Robotersystem nach einem der vorhergehenden Ausführungsbeispiel e, bei dem die Rückmeldung so ausgebildet ist, dass sie eine Fehlermeldung darstellt.

### Ausführungsbeispiel

17. Robotersystem nach einem der vorhergehenden Ausführungsbeispiele, bei dem die Operationen eine oder mehrere Operationen aus der Gruppe der Operationen Aufnehmen von Gegenständen, Ablegen von Gegenständen, Einfügen von Gegenständen, Einschrauben von Gegenständen, Bohren, Oberflächen bearbeiten oder Tasten bedienen umfassen.

### Ausführungsbeispiel

18. Robotersystem nach einem der vorhergehenden Ausführungsbeispiele, bei dem die Steuereinheit so konfiguriert ist, dass durch Betätigung bestimmter Tasten und/oder bestimmter Tastenkombinationen auf der Eingabevorrichtung eine bestimmte Auswahl von Operationen und/oder Parametern erfolgt.

### Ausführungsbeispiel

19. Robotersystem nach einem der vorhergehenden Ausführungsbeispiele, bei dem der Roboterarm aus mehreren Armgliedern besteht, wobei die Eingabevorrichtung an dem Armglied angebracht ist, an dem der Effektor angebracht werden kann.

### Ausführungsbeispiel

20. Robotersystem nach Ausführungsbeispiel 19, bei welchem die Eingabevorrichtung so ausgebildet ist, dass der Bediener, während er das Armglied, an dem der Effektor angebracht werden kann, mit seiner Hand führt, gleichzeitig mit derselben Hand die Eingabevorrichtung bedienen kann.

### Ausführungsbeispiel

21. Robotersystem nach einem der Ausführungsbeispiele 19 bis 21, bei welchem die Eingabevorrichtung axial dem Effektor gegenüberliegt.

### Ausführungsbeispiel

22. Robotersystem nach einem der vorhergehenden Ausführungsbeispiele, bei welchem die Steuereinheit so ausgebildet ist, dass sie eine graphische Benutzeroberfläche auf einer Anzeigevorrichtung darstellen kann, auf der die vordefinierte Operation darstellbar ist und die Steuereinheit darüber hinaus so ausgebildet ist, dass sie dem Bediener eine Rückmeldung in Abhängigkeit von der auf der graphischen Benutzeroberfläche dargestellten Operation liefern kann.

## Patentansprüche

1. Robotersystem mit zumindest
- einem Roboterarm,
- einer Steuereinheit, die so ausgebildet ist, dass sie zumindest eine vordefinierte Operation, die von dem Robotersystem durchführbar ist, vorgibt, und
- zumindest einer an dem Roboterarm angebrachten Eingabevorrichtung, die zur Parametrierung von vordefinierten Operationen des Robotersystems ausgebildet ist,
**dadurch gekennzeichnet, dass**
- die Eingabevorrichtung einem Benutzer des Robotersystems bei der Einstellung der Parametrierung der vordefinierten Operationen für das Robotersystem eine an den Benutzer gerichtete Rückmeldung liefert.

2. Robotersystem nach Anspruch 1
**dadurch gekennzeichnet,**
- **dass** die vordefinierten Operationen, die von dem Robotersystem durchführbar sind, durch die Steuereinheit vorgegeben sind, wobei diese Operation die entsprechenden Steuerbefehle umfasst, mit denen Achsen und Antrieb des Roboters geregelt werden.

3. Robotersystem nach Anspruch 1 oder 2,
**dadurch gekennzeichnet,**
- **dass** die im Rahmen der Parametrierung erfassten Parameter Koordinaten von Punkten, die der Effektor anfahren soll, umfassen.

4. Robotersystem nach einem der vorangehenden Ansprüche,
bei dem die Rückmeldung so ausgebildet ist, dass sie eine Aufforderung zur Auswahl einer vordefinierten Operation des Robotersystems aus einer Gruppe von vordefinierten Operationen darstellt.

5. Robotersystem nach einem der vorangehenden Ansprüche,
bei dem die Rückmeldung so ausgebildet ist, dass sie eine Aufforderung zur Eingabe eines Parameters einer Operation darstellt.

6. Robotersystem nach einem der vorangehenden Ansprüche,
**dadurch gekennzeichnet,**
- **dass** der Roboterarm mehrere Armglieder aufweist

7. Robotersystem nach einem der vorangehenden Ansprüche,
**dadurch gekennzeichnet,**
- **dass** eine Anzeigevorrichtung vorgesehen ist.

8. Robotersystem nach Anspruch 7,
**dadurch gekennzeichnet,**
- **dass** die Steuereinheit auf der Anzeigevorrichtung eine grafische Benutzeroberfläche darstellt,

9. Robotersystem nach Anspruch 8,
**dadurch gekennzeichnet,**
- **dass** über die grafische Benutzeroberfläche die Parametrierung der vordefinierten Operationen des Robotersystems erfolgt.

10. Robotersystem nach einem der vorangehenden Ansprüche,
**dadurch gekennzeichnet,**
- **dass** die Eingabevorrichtung an dem Armglied angebracht ist, an dem der Effektor angebracht ist.

11. Robotersystem nach einem der vorangehenden Ansprüche,
**dadurch gekennzeichnet,**
- **dass** in einem unteren Bereich eines letzten Roboterarmglieds ein Endeffektor anbringbar ist.

12. Robotersystem nach Anspruch 11,
**dadurch gekennzeichnet,**
- **dass** in einem oberen Bereich des letzten Roboterarmglieds die Eingabevorrichtung angeordnet ist.

13. Robotersystem nach Anspruch 11,
**dadurch gekennzeichnet,**
- **dass** in dem unteren Bereich des letzten Roboterarmglieds ein Griff befestigt ist, durch den das letzte Roboterarmglied bedient wird.

14. Robotersystem nach einem der vorangehenden Ansprüche,
**dadurch gekennzeichnet,**
- **dass** die Eingabevorrichtung ein Tastenfeld mit mehreren Tasten aufweist, wobei das Tastenfeld einen mittleren, zentralen und kreisförmigen Bereich mit nach oben, unten, links und rechts kippbaren Tasten umfasst.

15. Robotersystem nach einem der vorangehenden Ansprüche,
**dadurch gekennzeichnet,**
- **dass** die Eingabevorrichtung als Tastenpaneel gebildet ist.

16. Robotersystem nach einem der vorangehenden Ansprüche,
**dadurch gekennzeichnet,**
- **dass** die Eingabevorrichtung vier Eingabetasten umfasst, die kreisförmig vier voneinander isolierte Tasten umgeben, wobei die vier Tasten nach oben, unten, rechts und links kippbar sind.

17. Robotersystem nach einem der vorangehenden Ansprüche,
**dadurch gekennzeichnet,**
- **dass** das letzte Roboterarmglied zwischen seinem oberen Bereich und seinem unteren Bereich an einem vorletzten Roboterarmglied angeordnet ist und dass die Eingabevorrichtung an dem oberen Bereich und der Griff an dem, dem oberen Bereich gegenüberliegenden, unteren Bereich angeordnet ist.
